# EUROPEAN PATENT APPLICATION

(11) **EP 1 753 215 A2**
(43) Date of publication of application: **14.02.2007**
(21) Application number: 06015019.0
(22) Date of filing: 19.07.2006
(51) Int. Cl.: H04M 3/54

(54) **Method and system for redirecting calls in a mobile terminal**

(30) Priority: 10.08.2005 KR 20050073286; 22.12.2005 KR 20050127762
(71) Applicant: Samsung Electronics Co., Ltd., Suwon-si Gyeonggi-do (KR)
(72) Inventor: Yun, Young-Girl c/o Samsung Electronics Co., Ltd., Suwon-si, Gyeonggi-do (KR); La, Cheol-Soo c/o Samsung Electronics Co., Ltd., Suwon-si, Gyeonggi-do (KR)
(74) Representative: Lang, Johannes

(57) **Abstract**

A redirection method for a mobile terminal and a system using the same are provided. The redirection method and system include a first mobile terminal (10), wherein terminal information including the telephone number of the first mobile terminal (10) is stored in at least one redirection terminal (12a,12b) designated by a user and if an incoming call signal is generated for the first mobile terminal (10), the incoming call signal is received in the designated terminal (12a,12b) storing the information on the first mobile terminal. Accordingly, even if the first mobile terminal cannot be used, a call can be easily received by storing the telephone number of the first mobile terminal in another mobile terminal.

## Description

### BACKGROUND OF THE INVENTION

### Field of the Invention

The present invention relates generally to a mobile terminal and mobile terminal system. More particularly, the present invention relates to a call redirection method for a mobile terminal and a mobile terminal system using the same.

### Description of the Related Art

There has been an increase in personal use of mobile terminals due to their advantage of mobility. However, if a user does not carry their mobile terminal, he or she cannot perform functions such as making and receiving calls, acquiring information, or managing private information, and thus the user suffers an inconvenience. In particular, when a user cannot use their mobile terminal for a short term, for example if the mobile terminal is misplaced, or when the user does not carry the mobile terminal while moving, the user cannot receive an incoming call. Accordingly, there is a need for a mobile terminal system and redirection method for redirecting a call placed to a user.

### SUMMARY OF THE INVENTION

An object of the present invention is to address at least the above problems and/or disadvantages and to provide at least the advantages below. Accordingly, an exemplary object of the present invention is to provide a mobile terminal system and method by which a user can receive an incoming call or message sent to the user's mobile terminal by using another mobile terminal.

According to one exemplary aspect of the present invention, there is provided a mobile terminal system and method for redirecting a call wherein terminal information including the telephone number of a first mobile terminal is stored into at least one terminal designated by a user and, if an incoming call signal is generated by the first mobile terminal, the incoming call signal is received in the designated terminal storing the information of the first mobile terminal.

### BRIEF DESCRIPTION OF THE DRAWINGS

The above and other objects, features and advantages of exemplary embodiments of the present invention will become more apparent from the following detailed description when taken in conjunction with the accompanying drawings in which:
FIG. 1 is a schematic block diagram of a redirection system of a mobile terminal according to an exemplary embodiment of the present invention;
FIG. 2 is a signaling diagram of a process of registering a redirection terminal of a mobile terminal according to an exemplary embodiment of the present invention; and
FIG. 3 is a signaling diagram of a process of receiving a call in a mobile terminal according to an exemplary embodiment of the present invention.

### DETAILED DESCRIPTION OF THE EXEMPLARY EMBODIMENTS

Exemplary embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail. While the invention will be shown and described with reference to detailed components included in a certain exemplary embodiment thereof, it will be understood by those skilled in the art that various changes in form and details may be made therein without departing from the spirit and scope of the invention.

In exemplary embodiments of the present invention, a user's mobile terminal is defined as a first mobile terminal, terminals for receiving an incoming call to the user's mobile terminal are defined as redirection terminals (a second terminal and a third terminal), and a terminal for transmitting a call to the first mobile terminal is defined as a fourth terminal.

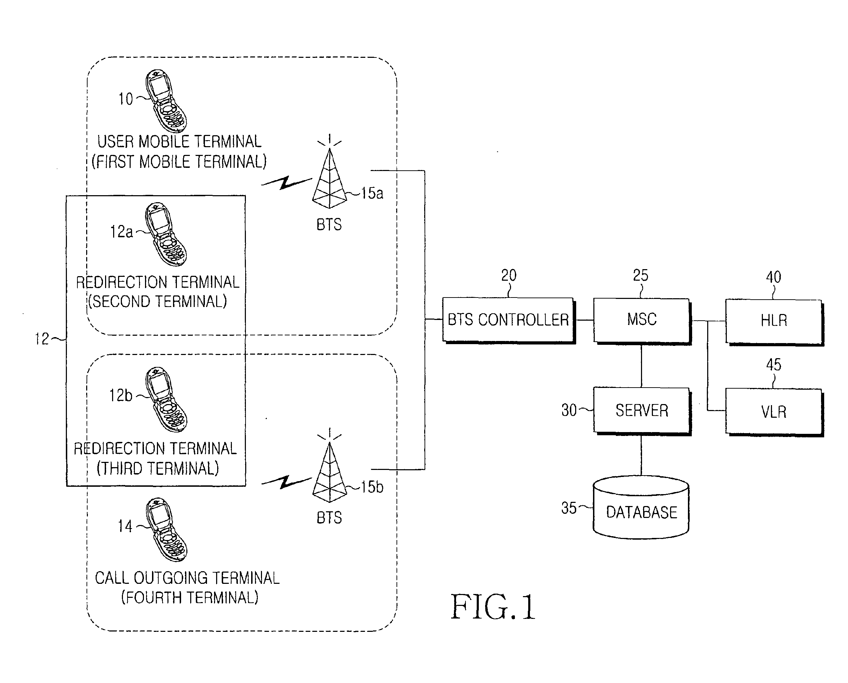

FIG. 1 is a schematic block diagram of a redirection system for a mobile terminal according to an exemplary embodiment of the present invention. Referring to FIG. 1, a mobile communication system generally comprises base transceiver stations (BTSs) 15a and 15b (or simply 15) each for managing a certain area, a BTS controller 20 controlling a plurality of BTSs 15, a mobile switching center (MSC) 25, a home location register (HLR) 40, and a visitor location register (VLR) 45. The HLR 40 is a component for registering various kinds of information on subscribers who have originally registered into the MSC 25, and the VLR 45 is a component for registering information on subscribers who have entered into the coverage area of the MSC 25 from another area. A current location of a mobile terminal 10 is recognized through each BTS 15 and reported to the MSC 25 via the BTS controller 20, and the HLR 40 and the VLR 45 are used to record information on the movement of subscribers.

The mobile communication system according to an exemplary embodiment of the present invention comprises a first mobile terminal 10, which is a user's mobile terminal, redirection terminals 12a and 12b to receive an incoming call originally sent to the first mobile terminal 10, and a fourth mobile terminal 14 for transmitting a call to the first mobile terminal 10. The mobile communication system also includes a server 30 connected to the terminals 10, 12a, 12b, and 14 via the BTSs 15, for receiving a redirection request signal from the first mobile terminal 10, searching for the redirection terminals 12a and 12b designated by a user in response to the redirection request signal, and storing information of the first mobile terminal 10 and the found redirection terminals 12a and 12b into a database 35.

When the server 30 senses an incoming call to the first mobile terminal 10, the server 30 searches for the redirection terminals 12a and 12b. Then, the server 30 informs or notifies the found redirection terminals 12a and 12b and the first mobile terminal 10 of the incoming call. The server 30 analyzes which of the terminals responds to the notice of the incoming call among the redirection terminals 12a and 12b and the first mobile terminal 10 and transmits information on the responding terminal to the redirection terminals 12a and 12b and the first mobile terminal 10.

As described above, the redirection system for a mobile terminal according to an exemplary embodiment of the present invention comprises at least one mobile terminal 12a and 12b for storing information containing the telephone number of the first mobile terminal 10 and receiving an incoming call originally sent to the first mobile terminal 10, the plurality of BTSs 15a and 15b for managing a certain area according to locations of the mobile terminals 10, 12a, 12b, and 14, the MSC 20 for controlling the plurality of BTSs 15a and 15b, and the HLR 40 and the VLR 45 for storing information containing location information of mobile terminals. The redirection system for a mobile terminal also comprises the server 30, which searches for information about the first mobile terminal 10 and information about the redirection terminals 12a and 12b to be used to receive an incoming call sent to the first mobile terminal 10 and informs the first mobile terminal 10 and the redirection terminals 12a and 12b of the incoming call, and the database 35 connected to the server 30 for storing the information about the first mobile terminal 10 and the information about the redirection terminals 12a and 12b to be used to receive an incoming call sent to the first mobile terminal 10.

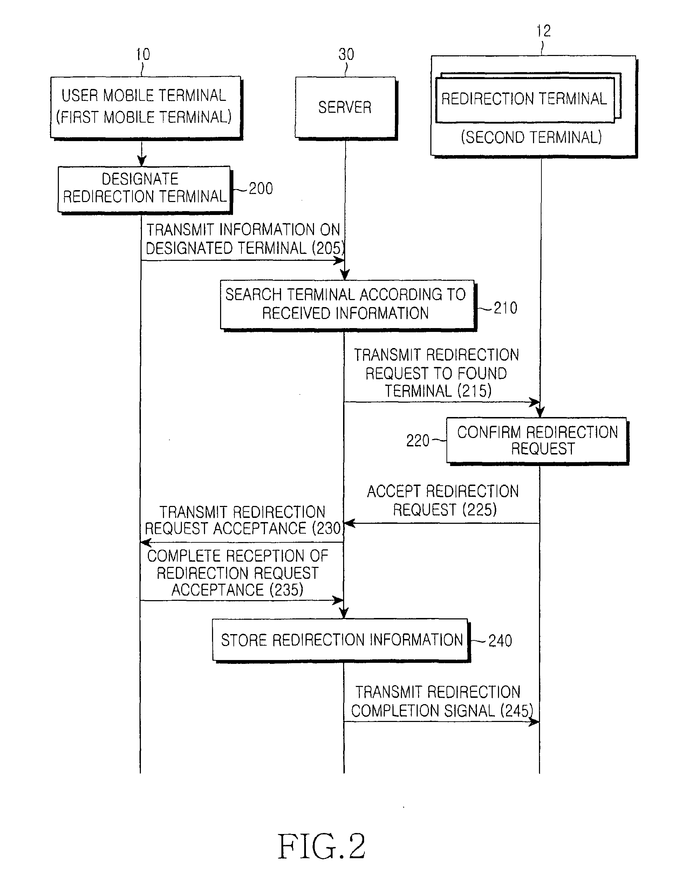

FIG. 2 is a signaling diagram of an exemplary process for registering a redirection terminal for a mobile terminal according to an exemplary embodiment of the present invention. Referring to FIG. 2, the first mobile terminal 10 provides a redirection menu which allows a user to choose to receive an incoming call or message sent to the first mobile terminal 10 in another terminal. That is, in step 200, a user designates a redirection terminal for receiving an incoming call sent to the first mobile terminal 10 using the redirection menu of the first mobile terminal 10. In step 205, the first mobile terminal 10 transmits information about the designated redirection terminal to the server 30. When the information about the designated redirection terminal is transmitted, information about the first mobile terminal 10 is included. Each of the transmitted terminal information contains a telephone number, an electronic serial number (ESN), and user information.

In step 210, the server 30 searches for the information about the first mobile terminal 10 and the redirection terminal in response to the redirection information received from the first mobile terminal 10. In step 215, the server 30 transmits a redirection request signal for the first mobile terminal 10 to the terminal designated as the redirection terminal according to the search result. The terminal designated as the redirection terminal can be singular or plural and can be a mobile terminal or a wired telephone. Priorities of the designated terminals can be set, and when the designated terminals simultaneously receive an incoming call, the incoming call is connected to a terminal having a higher priority.

In step 220, a terminal 12, which has received the redirection request signal, confirms the redirection request signal and accepts the redirection for the first mobile terminal 10. In step 225, the redirection terminal 12 transmits a redirection acceptance signal to the server 30. In step 230, the server 30 transmits the redirection acceptance signal, which has been received from the redirection terminal 12, to the first mobile terminal 10. In step 235, the first mobile terminal 10 transmits to the server 30 a reception completion signal for informing of the reception of the redirection acceptance signal from the server 30. When the server 30 receives the reception completion signal from the first mobile terminal 10, in step 240, the server 30 stores the information of the first mobile terminal 10 and the information of the redirection terminal 12 set to receive an incoming call sent to the first mobile terminal 10. In step 245, the server 30 transmits a redirection completion signal to the redirection terminal 12.

Table 1 indicates data stored in the database 35 connected to the server 30 in step 240 according to an exemplary embodiment of the present invention.

**[Table 1]**

| Mobile terminal | | Terminal information | |
|---|---|---|---|
| | | Telephone number | ESN |
| User mobile terminal | First mobile terminal | 111-1111 | AAA1111 |
| Redirection requested terminal | Second terminal | 222-2222 | BBB2222 |
| | Third terminal | 333-3333 | CCC3333 |
| Redirection terminal after redirection completion | Second terminal | 111-1111 | BBB2222 |
| | | 222-2222 | |
| | Third terminal | 111-1111 | CCC3333 |
| | | 333-3333 | |

As illustrated in Table 1, when the first mobile terminal 10 requests redirection to the second terminal 12a and the third terminal 12b, the server 30 transmits a redirection request signal to the requested redirection terminals 12a and 12b. The server 30 receives a redirection acceptance signal, transmitted from the second terminal 12a and the third terminal 12b, in response to the redirection request signal and stores the telephone number and ESN of the first mobile terminal 10 and the telephone numbers and ESNs of the redirection terminals 12a and 12b into the database 35 connected to the server 30. In addition, the redirection terminals 12a and 12b store the telephone number of the first mobile terminal 10.

As described above, to receive a call incoming to the user mobile terminal 10 in other terminals, the user mobile terminal 10 allows the user to select redirection terminals and transmits a redirection request signal to the server 30. The server 30 receives a redirection acceptance signal from terminals selected as the redirection terminals and stores information on the user mobile terminal 10 and the redirection terminals, and accordingly, the registration of the redirection terminals is completed.

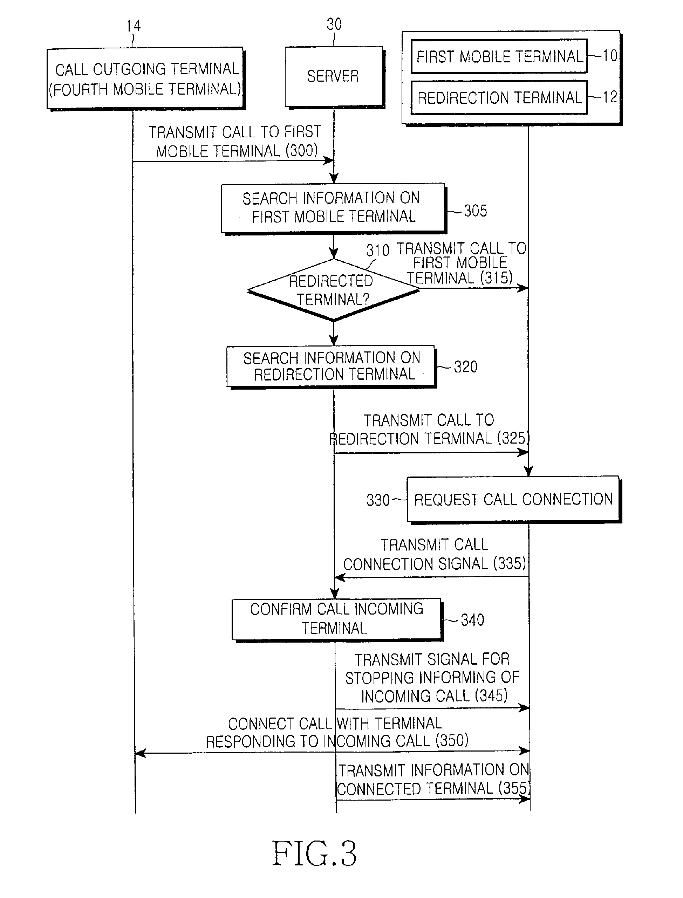

FIG. 3 is a signaling diagram of a process of receiving a call in a mobile terminal according to an exemplary embodiment of the present invention. Referring to FIG. 3, in step 300, the fourth terminal 14 transmits a call to the telephone number of the first mobile terminal 10. When the server 30 senses the outgoing call from the fourth terminal 14 to the first mobile terminal 10, in step 305, the server 30 searches for information about the first mobile terminal 10. In step 310, the server 30 determines whether the first mobile terminal 10 is a terminal set to perform call redirection based on the found information. If it is determined that the first mobile terminal 10 is not set to perform call redirection, in step 315 the server 30 transmits a signal for informing the first mobile terminal 10 of the incoming call so that only the first mobile terminal 10 can receive the call.

If it is determined instead that the first mobile terminal 10 is set to perform call redirection, in step 320 the server 30 searches for information on a redirection terminal 12 by reading terminal information stored in the database 35. The found information contains the telephone number and ESN of the first mobile terminal 10 and the telephone number and ESN of the redirection terminal 12. After accessing the found information, in step 325 the server 30 transmits a signal which informs of the incoming call to the redirection terminal 12, which is going to receive the call that was originally made to the first mobile terminal 10. The call incoming signal may also be received by the first mobile terminal 10 according to a user's setting. In an exemplary embodiment, the first mobile terminal 10 also receives the call.

In step 330, both the first mobile terminal 10 and the redirection terminal 12, which have received the call incoming signal, inform the user of the incoming of the call. Both the first mobile terminal 10 and the redirection terminal 12 are able to receive the incoming call. When one of the first mobile terminal 10 and the redirection terminal 12 performs the connection to the incoming call, in step 335the terminal performing the connection to the incoming call transmits a call incoming execution signal containing information therein to the server 30. In step 340, the server 30 confirms information about the terminal which has performed the connection to the incoming call. In step 345, the server 30 transmits a signal for stopping the informing of the user of the incoming of the call to the terminal which has not performed the connection to the incoming call, since the other of the terminals has performed the connection to the incoming call. In step 350, the call is connected between the fourth terminal 14, which has transmitted the call, and the terminal 10 or 12, which has performed the connection to the incoming call. In step 355, the server 30 transmits the information on the terminal 10 or 12, which has performed the connection to the incoming call, to the terminal 12 or 10, which has not performed the connection of the incoming call. Then, the terminal, which has not performed the connection to the incoming call 12 or 10, displays the information about the terminal 10 or 12, which has performed the connection to the incoming call.

Although the incoming call has been described in the exemplary embodiment, the redirection also can be performed for an incoming message even if the redirection of the incoming message is not illustrated. The redirection of the incoming message will now be schematically described with reference to the detailed description of the call redirection. When the server 30 senses an outgoing message of the fourth terminal 14, the server transmits a signal for informing of the incoming message to the redirection terminal 12 and the first mobile terminal 10. When one of the redirection terminal 12 and the first mobile terminal 10 performs connection to the incoming message, the terminal, which has performed the connection to the incoming message, displays the contents of the message received from the fourth terminal 14. The incoming message can be stored in the redirection terminal 12 and the first mobile terminal 10 according to a user's setting.

Although two terminals, in other words the second terminal 12a and the third terminal 12b are redirection terminals in an exemplary embodiment of the present invention, the number of the redirection terminals can be increased according to a user's demand. By displaying call incoming information when a call is received, the redirection terminal can identify a call incoming to the first mobile terminal 10 and a call incoming thereto. In addition, although the user designates the redirection terminals using the user's mobile terminal (the first mobile terminal) 10 in an exemplary embodiment of the present invention, the user can perform a redirection request using a terminal to be redirected which is not the first mobile terminal 10. That is, the user can transmit a redirection request to the server 30 by inputting information on the first mobile terminal 10 using, for example, a redirection terminal.

As described above, by a call redirection method for a user mobile terminal according to the exemplary embodiments of the present invention, even if the user's mobile terminal cannot be used, a call can be easily received by storing a telephone number of the user mobile terminal in another mobile terminal.

While the invention has been shown and described with reference to a certain exemplary embodiments thereof, it will be understood by those skilled in the art that various changes in form and details may be made therein without departing from the spirit and scope of the invention as defined by the appended claims including the full scope of equivalents thereof.

## Claims

1. A redirection method for a mobile terminal, the method comprising the steps of:
storing terminal information comprising the telephone number of a first mobile terminal in at least one redirection terminal, which redirection terminal is designated by a user; and
if an incoming call signal is generated for the first mobile terminal, receiving the incoming call signal in the designated redirection terminal storing the information of the first mobile terminal.

2. The method of claim 1, further comprising the steps of:
requesting a server managing information about the terminals to store the information of the first mobile terminal by adding it to information of the designated redirection terminal; and
storing the information of the first mobile terminal and the information of the designated redirection terminal, which has stored the information of the first mobile terminal, into the server.

3. The method of claim 2, wherein each of the information of the first mobile terminal and the designated redirection terminal comprises one of an electronic serial number (ESN), user information, and a telephone number.

4. The method of claim 1, wherein the designation of the redirection terminal is performed by at least one of the first mobile terminal and the designated redirection terminal.

5. The method of claim 1, further comprising the steps of:
when an incoming call is received at the first mobile terminal, searching, by a server, for a redirection terminal storing the information of the first mobile terminal;
confirming the redirection terminal storing the information of the first mobile terminal as the search result; and
informing the found redirection terminal and the first mobile terminal of the incoming of the call and displaying information on the call to inform the user.

6. The method of claim 5, further comprising the steps of:
when the first mobile terminal and the redirection terminal inform the user of the incoming call, determining whether a response is made to the incoming call;
if a response to the incoming call is made, stopping the informing the user of the incoming call at the first mobile terminal and the redirection terminal; and
displaying information about the terminal which has responded to the incoming call on the other terminal.

7. The method of claim 5, further comprising the steps of:
when the first mobile terminal and the redirection terminal inform the user of the incoming call, determining whether a response to the incoming call is made; and
if a plurality of terminals has responded to the incoming call, performing a multipoint call using the plurality of terminals.

8. The method of claim 1, further comprising the steps of:
informing the first mobile terminal and at least one redirection terminal of reception of an incoming message as a signal, and displaying information on reception of the incoming message;
determining whether a response is made to the reception of the incoming message; and
displaying the contents of the incoming message on a the terminal which has responded to the reception of the incoming message and stopping informing of the reception of an incoming message.

9. The method of claim 8, further comprising the step of storing the incoming message in the first mobile terminal and a redirection terminal, which has responded to the reception of the message incoming to the first mobile terminal.

10. The method of claim 1, wherein when an incoming call is received at the redirection terminal which stores information of the first mobile terminal, informing the redirection terminal of reception of the incoming call by identifying whether the incoming call is a call incoming to the first mobile terminal or the redirection terminal.

11. A redirection method of a mobile terminal, the method comprising the steps of:
requesting a server managing first and second mobile terminals to store information about the first mobile terminal in the second mobile terminal;
the server storing the information, which contains a telephone number of the first mobile terminal in the second mobile terminal in response to the request and blocking a telephone number of the second mobile terminal;
when a call to the telephone number of the first mobile terminal is generated, the server checking information on the first mobile terminal and information on the second mobile terminal;
the server informing the second mobile terminal, which has stored the telephone number of the first mobile terminal, of the generation of the call according to the checking result; and
the second mobile terminal receiving the call incoming to the first mobile terminal.

12. The method of claim 11, wherein when a message is received at the first mobile terminal, the received message is displayed on the second mobile terminal and stored in the first mobile terminal.

13. A mobile terminal system comprising:
a first mobile terminal; and
a second terminal; wherein the second terminal stores information of the first mobile terminal comprising the first mobile terminal's telephone number such that if an incoming call signal is generated for the first mobile terminal, the second terminal receives the incoming call signal.

14. The mobile terminal system of claim 13, further comprising:
a server which manages and stores information of the first mobile terminal and the second terminal.

15. The mobile terminal system of claim 14, wherein the managed and stored information comprises at least one of an electronic serial number (ESN), user information and a telephone number.
